# EUROPEAN PATENT APPLICATION

(11) **EP 1 681 642 A1**
(43) Date of publication of application: **19.07.2006**
(21) Application number: 05368005.4
(22) Date of filing: 14.01.2005
(51) Int. Cl.: G06F 17/30

(54) **Process for improving access to a database and apparatus for performing the same**

(71) Applicant: Société Arobace Editions, 75 004 Paris (FR)
(72) Inventor: Aneas, Francois, 75004 Paris (FR); Combes, Pierre, 77600 Bussy St Georges (FR); Rives, Jean-Pierre, 75011 Paris (FR)
(74) Representative: Schuffenecker, Thierry

(57) **Abstract**

A Process for accessing a server associated to a database in a client-server configuration, said process comprising the steps of :
- setting up a connection to a web server (21) associated to a database;
- construction of a page comprising a reference (URL) to an applet java; the execution of said applet java causing access to said database for the purpose of elaboration of at least one table comprising information extracted from said database;
- pushing said page into a client browser;
- displaying into said client at least one graphical object representative of a numerical value within a predetermined range, said at least one graphical object being movable by the user;
- monitoring the control of said at least one graphical object by the user,
- in response to said monitoring, performing a local query within said at least one table with the numerical values defined by said graphical objects in order to derive a preselection feedback information to user;
- returning said preselection feedback information to the user;
- in response to the user validating said preselection, constructing a query for the purpose of requesting the details of said preselection.

## Description

### Technical field of the invention

The invention relates to telecommunications and more particularly to a process for improving the access to a remote database in a client-server configuration.

### Background art

The constant progress of the communication systems and technology and that of the communication systems, particularly with the explosion of the Internet and intranet networks, has resulted in the development of an era of information and services.

More and more information and services are now available on the Internet network and the huge development of databases has resulted in a clear difficulty, for the consumer of the Information technology, to find over the Internet the valuable information he or she is looking for.

Graphical tools were developped for enhancing the interface with web servers and remote database and thus rendering their access more convenient and more "user-friendly" to the web customers.

Such are the well-known pop-up menus and other useful tools.

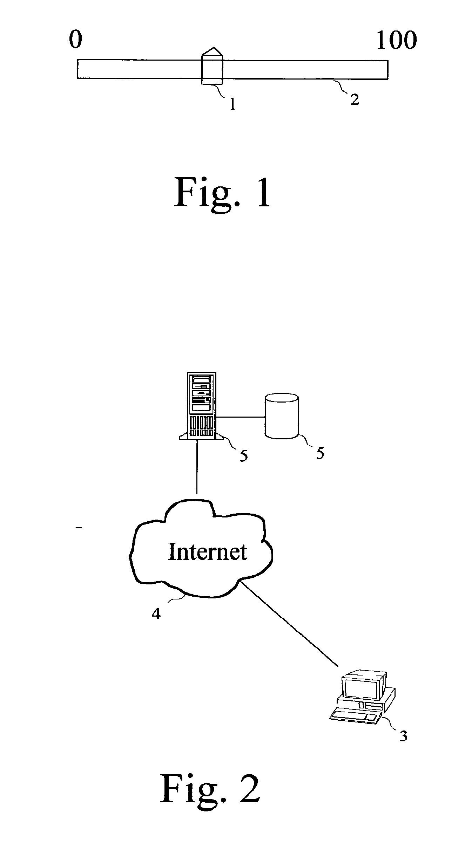

One particular tool - a so-called slider - shows to be very appreciated by web customers since they permit an easy entering of one graphical value within one predetermined range of values. A slider appears, as illustrated in figure 1, as a movable cursor 1 which can be controlled by a mouse or any pointing device, and which position can be "moved" along a line 2 corresponding to a predetermined range of numerical values, for instance. By setting the curson - by means of the mouse - to one predetermined point of the range of values, one particularly numerical value can be easily inputted within the system in a user-friendly manner and may server as a criterium value for accessing the database.

Such slider is clearly one useful tool for controlling a web browser but shows to be not so easily adapted to the structure of web servers.

In one known slider technique, the user is provided with the possibility to control the position of the slider (e.g. by means of a drag and drop feature) and, once one particular position has been set by the user, the latter may click on ENTER or OK for the purpose of confirming that selection and requesting a page to the web server with one numerical value corresponding to the position or adjustement of the slider. While this first known technique is useful for entering a numerical value within the system, there is one clear drawback since there is no interaction between the slider and the database before the ENTER or OK key is being actuated. Since the moving of the slider does not provide any useful information regarding the actual contents of the database the user is interested in, the whole interest of the slider is clearly lowered. In particular, it is not rare, and many user did experience that frustration, that the selection of one particular numerical value selected by the known slider finally returns ... no interesting output (or conversely a huge amount of hits).

Such known technique is clearly non satisfactory. In addition, since the moving of the slider has to to be validated by the actuation of the OK or RETURN , that means that a high number of requests has to be sent to the web server and that clearly increases the operating costs charged by the Internet Service Provider.

In order to improve the interaction between the instantaneous position of the slider and the information being displayed and reported to the user, some web designers incorporated data base information *within* the HTML page being displayed. That clearly permits the instantaneous display of feedback - within the same HTML page - as the user continuously controls and move the slider by means of the mouse. For instance, in some commercial web applications manufacturing commercial products, such as portable computers, the user may control one slider for the purpose of defining one maximum price and the HTML page then immediately outputs some results. That technique, while being very effective, has the strong drawback of requiring to constantly update the HTML page whenever a change occurs in the price of the computers. More generally, again, there is no clear interaction , in that method, between the control of a slider and the contents of a database accessed by a web server.

In addition, the know technique does not permit several sliders to be used simultanteously in one same page.

In another known technique, the interaction betrween the slider and one database is clearly enhanced by means of a java code which is executed within a HTML or dynamic page and which permits information extracted from a database to be continuously extracted and displayed within one same HTML page. Information is extracted by means of SQL queries and thus permits the java code to construct a well tailored dynamic or HTML page providing useful and valuable information to the user. Such technique is clearly effective but requires high communication rate and is thus generally reserved for organizations - such as intranet networks of financial institutions - having powerful intranet networks fitted with security means and high rate Local Area Network (L.A.N.) In particular, it is clearly dependent on the communication rate of the intranet network since it continously requests communication between the client and the server. It is simply not applicable in low cost applications or for the development of web sites for Small and Medium Enterprises (S.M.E.).

Therefore, there is still a need for a powerfull slider technique which can be applicable in very general circumstances, and particularly for low cost web servers with only limited access is provided, and which significantly reduces the number of requests forwarded to the web server.

### Summary of the invention

It is an object of the present invention to improve the possibilities of accessing a remote database in a client server configuration.

It is another object of the present invention to provide a new mechanism using a set of attractive graphical sliders providing immediate feedback on the information contained within a remote data base, before a request is forwarded to the database..

It is a further object of the present invention to provide a new process for enhancing the access to a remote database even with a low data transfer rate communication rate.

It is still another object of the present invention to decrease the number of hits required for accessing a remote database stored on a remote server and, thus, reduce the costs of said server.

These objects are achieved by a process for for accessing a server associated to a database in accordance with the present invention. The process comprises the following steps:
- setting up a connection to a web server (21) associated to a database;
- construction of a page comprising a reference (URL) to an executable code, such as an applet java for instance; the execution of said applet java causing access to said database for the purpose of elaboration of at least one table comprising information extracted from said database;
- pushing said page into a client browser;
- displaying into said client at least one graphical object representative of a numerical value within a predetermined range, said at least one graphical object being movable by the user;
- monitoring the control of said at least one graphical object by the user,
- in response to said monitoring, performing a local query within said at least one table with the numerical values defined by said graphical objects in order to derive a preselection feedback information to user;
- displaying said preselection feedback information to the user;
- in response to the user validating said preselection, constructing a query for the purpose of requesting the details of said preselection.
   In a preferred embodiment, the graph object is a slider which is movable along a rage of numerical values.
   In one particular embodiment, the table which is received on the client side is contained within a hidden i-form, preferrably coded in ASCII and compressed. That resultst in the significant advantage of being usable in very low cost configuration, ie with basic servers.
   Alternatively, the table, which can be a multidimensional table, is directly constructed by an applet java and stored within the memory (e.g. the RAM) of the client computer.
   The invention also provides an apparatus and program code elements for carrying out the process defined above.

### Description of the drawings

An embodiment of the invention will now be described, by way of example only, with reference to the accompanying drawings, wherein:
Figure 1 illustrates the basic mechanism of a slider
Figure 2 illustrates the general communication between one computer and a database access through an Internet network.
Figure 3 is a flow chart illustrating a first embodiment of the invention based on the use of i-forms.
Figure 4 is a flow chart illustrating a cond embodiment of the invention based on the use of an applet java.
Figure 5 illustrates an example with several sliders being simultaneously used within the same page.

### Description of the preferred embodiment of the invention

Figure 2 illustrates the general environment where the process of the invention can be easily employed. A personal computer or system 3 is connected to a web portal or web server 5 through the Internet or an Intranet network 4. Web server 5 is connected to a database 6 which is arranged to receive typicall queries under the appropriate format, such as, for instances, MySQL, SQL, DB2, ORACLE. As known by the skilled man, an intranet network is a private TCP/IP network which is typically deployed by an organization that conforms to the traditional internet standard. Generally speaking, the same protocols are used within an intranet network and within the internet but the access to the former is reserved to a limited number of persons belong to the corresponding organization while the latter shows accessibility to the wide public. Intranets are connected to the internet via secure gateways known as firewalls. Clearly, the personal computer 3 can be any common personal computer or system fitted with memory and peripherals devices (printer, display, keyboard) and communicating means for accessing the Internet network or an Intranet network. Moreoever, it will be apparent that the invention can be adapted to the communication of any Information Handling System (I.H.S.), such as a portable computer , an handheld or pocket Pc, or even any mobile telephone doted with appropriate communication means for accessing to a remote database.

The preferred embodiment will be more particularly described in reference with a computer fitted with an Operating System (O.S.), such as of the type WINDOWS XP, WINDOWS 2000 marketed by MICROSOFT Corp., or a LINUX operating system or any other Operating System. The Operating System provides an operational environment for a wide number of softwares, and particularly a web browser which is, for instance, *Internet Explorer 6* (manufactured by Microsoft Corp.) or *Netscape Explorer* (manufactured by Netscape Communications Corp. The web browser is used for accessing HTML pages located from web server 5 and and, when appropriate, for downloading the applet therein included.

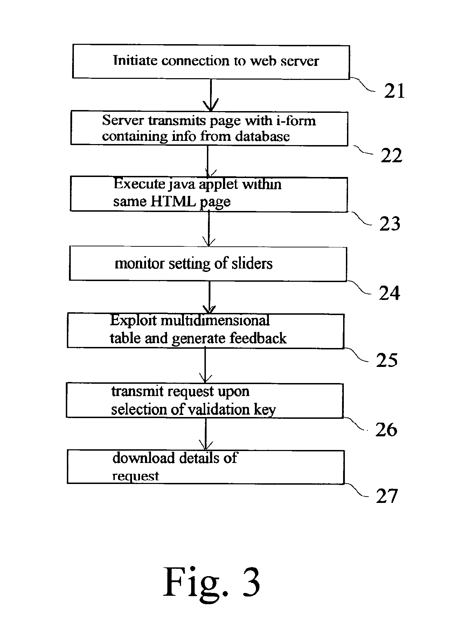

With respect to figure 3, there is now described a first embodiment of the invention which is based on the use of a iforms.

In a step 21, the client computer 3 sets up a connection to the electronic service portal 5 or web server using the appropriate URL of the web portal, such as, for instance, http://www.hp.eservice.com. Clearly, the communication can take advantage of the widely used Internet protocols, and particular the HyperText Transfer Protocol (HTTP). In the preferred embodiment, the local agent issues a request for transaction which is embedded into a HTTP GET request which is recognised at every level, and particularly by every proxy. The particular format of the HTTP GET request is defined in the well-known rules laid down in the Request For Comments (RFC) 2.6.1.6, which are available at the following address http://www.w3.org/protocols. In some particular applications, it could be useful to use the securized version of the HTTP protocol, ie the so-called HTTPs.

The web portal receives the request and prepares, in a step 22, the construction of an Hyper Text Markup Language (H.T.M.L.) page which is transmitted back to the user's computer and pushed into his web browser. In one preferred embodiment, web portal provides access to a database of commercial products, such as stand-alone or portable computers , with the corresponding characteristics and prices. Clearly the web portal generates, upon request from the user, HTML pages or dynamic pages which are pushed within the web browser of the client computer of the user. The invention is applicable to the generation of basic static HTML pages and also dynamic pages.
The web portal generates web pages which causes display , within the web browser of the user, of a set of sliders, each one corresponding to one particular criterium for the selection of the commercial products. One slider is assigned to the price of the product, one slider is assigned to the total weight of the machine, still another slider is dedicated to the capacity of the harddisk etc...

Clearly, the skilled man would adapt the teaching of the invention to any type of web server applications and more generally to any type of database which are to be accessed through different numerical criteria.

The HTML or dynamic page particularly contains an i-form, being hidden to the user, which is already filled with information extracted from the database for the purpose of constructing, by means of a java code the reference of which being on the same page, a multidimensional table which can server for computing a feedback of the control of one or more sliders.

An i-form is known by the skilled man for entering information typed by a user, which is then *uploaded* on to the webserver.

The invention deviates the use of the i-form by using such i-form for carrying - in a page which is *downloaded* to a client computer - information for the purpose of generating a immediate feedback regarding the result of a future requests as a function of the position of the sliders controlled by the user. Since the i-form is hidden, the user can not see it, but an applet java can nevertheless use the information therein stored for the purpose of deriving a feedback informaiton to the user regarding the particular settings of the sliders.

In the preferred embodiment, the feedback regarding the particular settings of the sliders is the display of the number of produts (ie the number of computers stored within the commercial data base) which matches the criteria defined by the particular settings of the sliders.

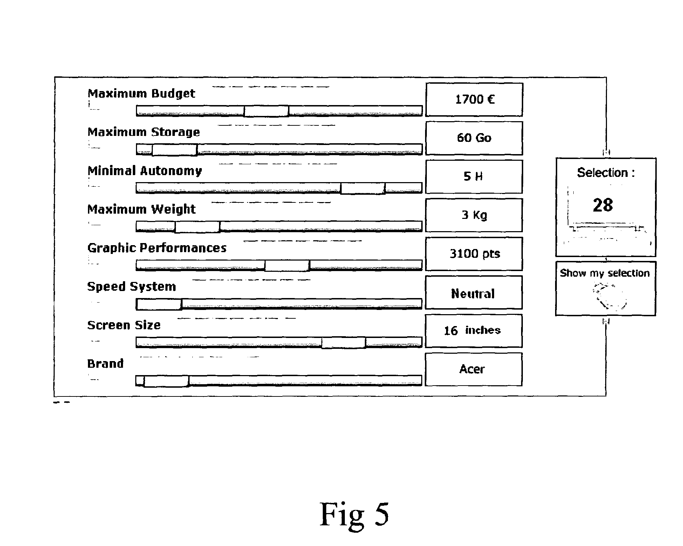

It should be noticed, and this is clearly a significant advantage of the invention, that the feedback provided to the user does not require the need to forward any new request to the web server, contrary to the known techniques. That clearly reduces the number of requests forwarded to the web server and, thus, the operating costs of the latter. In addition, there is now provided, with this new and effective process, the possibility to use multiple sliders within a same HTML or dynamic page and that is another significant advantage. Figure 5 illustrates such multiple sliders for a data base of computer products on sale.

In one preferred embodiment, the i-form is filled with part or whole of the contents of the database, coded under the ASCII form, and which is preferrably compressed for the purpose of reducing the size of the data being exchanged. Many compression methods can be used in that respect, and particularly methods similar to the well known zip format. The skilled man will straightforwardly adapt the invention to any other compression method.

It should be further noticed that, since the i-form is not stored within the client computer under the form of a file, but is stored within the RAM memory, there is still provided a high security level on the valuable information stored within the database. In addition, since most web servers support the i-form feature, there is thus provided a very attractive graphical tool which can be used even for low cost web servers.

In a step 23, the process executes the code of a java applet executed within the same HTML page, for the purpose of monitoring of the particular setting of the set of sliders.

In a step 24, the process performs the continuous monitoring of the particular settings of the different sliders being displayed within the HTML page.

In a step 25, the process then exploits the multidimensional table which is incorporated wiithin the i-form for the purpose of computing, within the same HTML page, a feedback to the user that corresponds to the particular settting of the sliders being considered.

In a preferred embodiment, the feedback is given under the form of the actual number of products which matches the particular setting of the sliders. It should be noticed that the feedback corresponds to the actual number which would be rendered if the user validates the request and forward it to the web server.

In a preferred embodiment, the feedback if provided to the user under visual form. This is clearly only one example and other forms, such as audible feedback could be used.
In a step 26, the process then tests the actuation of the confirmation key - what is generally performed by means of a ENTER or OK button - and, in that case, the process generates and forwards a request to the web server for the purpose of executing a query - formatted in the proper query langage (e.g. under SQL).
In a step 27, the web server then returns a properly constructed page which matches the criteria contained within the requests and providing the details of the outputs. It should be noticed that the number of hits issued by step 27 will correspond to the figure which was already provided to the user in step 25.

Therefore, the process of the invention provides an effective graphical tool, under the form of a set of sliders usable for entering a set of numerical criteria, for preforming a preselection within a database and thus facilitating the access to such database.

Clearly, the process which was described in reference with figure 3 could be adapted with other graph objects or graph tools which can be used for entering numerical values.

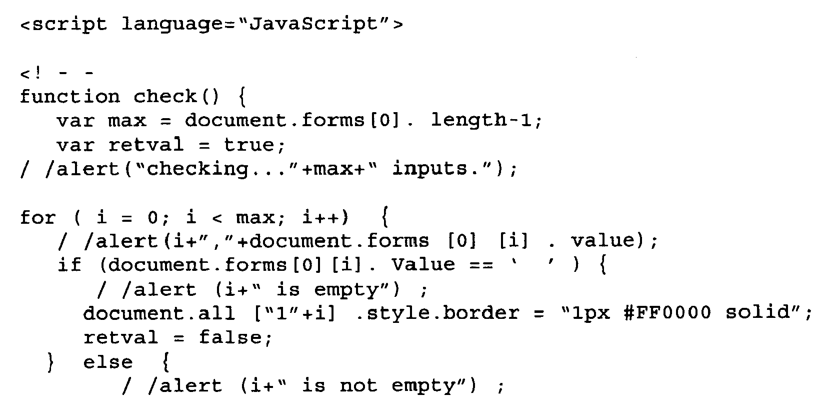

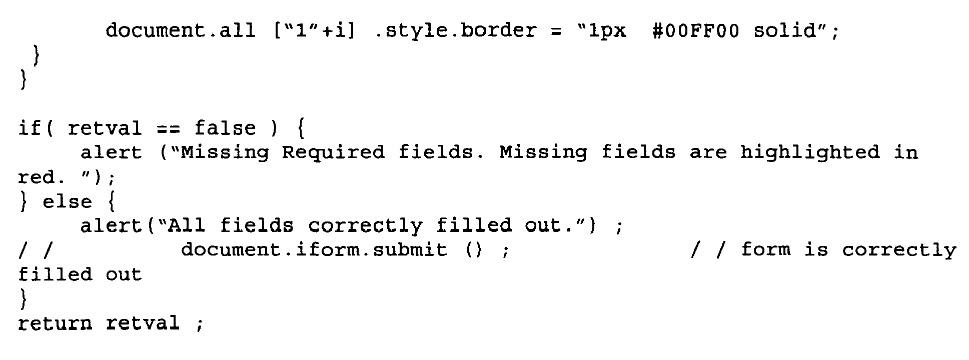

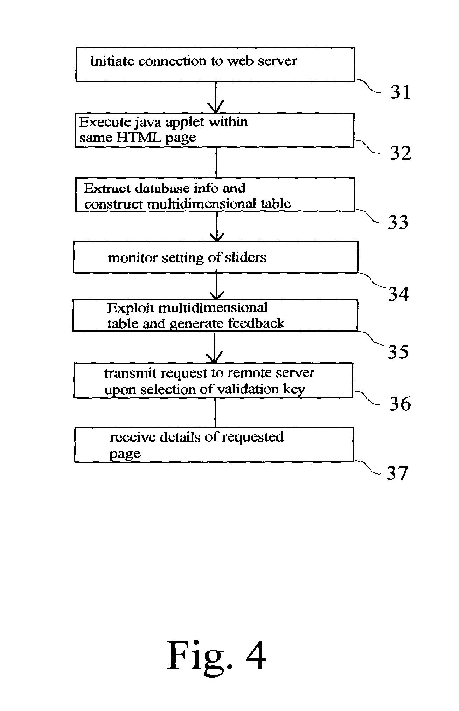

With respect to figure 4, there is now decribed a second embodiment of the invention which is based on the use of an applet java code for directly constructing , within the RAM mermory , a multidimensional table for the purpose of providing feedback to the user regarding a particular setting of the sliders.

In a step 31, the client computer sets up a connection to the electronic service portal as previously in step 21 of figure 2.

The web portal receives the request and prepares, in a step 32, the construction of an HTML page containg a java code which is executed.

In a step 33, the java applet extracts information from the remote database and constructs a multidimensional table which is filled with the information extracted. The java applet constructs, within the client computer, the multidimensional table which contains that information. Since the multidimensional table remains in the RAM memory of the client computer, there is increased the level of security brought to the contents of that database. Alternatively, data compression methods can be further employed for increasing security and also for reducing the size of the information being downloaded by the applet.

Then, in a step 34, the applet monitors the settings of the sliders which are controlled by the user by means of the mouse and automatically derives, from the contents of the multidimensional table existing within the RAM storage, a feedback information regarding the particular settings of the sliders.

As before, and this is again a significant advantage of the invention, the feedback provided to the user does not require the need to forward any new request to the web server.

In a step 35, the process then exploits the multidimensional table which is incorporated wiithin the i-form for the purpose of generating a query, formatted as a server query, which is locally processed in order to provide, within the same HTML page, a feedback to the user corresponding to the particular settings of the sliders.

In a preferred embodiment, the feedback is given under the form of the actual number of products which matches the particular setting of the sliders. It should be noticed that the feedback corresponds to the actual number which would be rendered if the user validates the request and forward it to the web server.

In a step 36, the process then tests the actuation of the confirmation key - what is generally performed by means of a ENTER or OK button - and, in that case, the process generates and forwards a request to the web server for the purpose of executing a query - formatted in the proper query langage (e.g. under SQL).

In a step 37, the web server then returns a properly constructed page containing the details of the outputs. As previously, for the process of figure 3, the number of hits actually corresponds to the feedback information displayed in the step 35.

Therefore, the process of the invention provides an effective graphical tool, under the form of a set of sliders usable for entering a set of numerical criteria, for preforming a preselection within a database and thus facilitating the access to such database.

The invention can be adapted to a wide number of database, such as ORACLE, DB, etc...

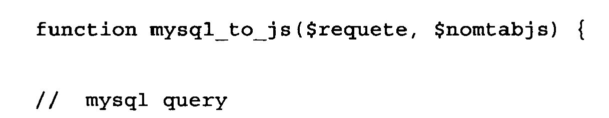

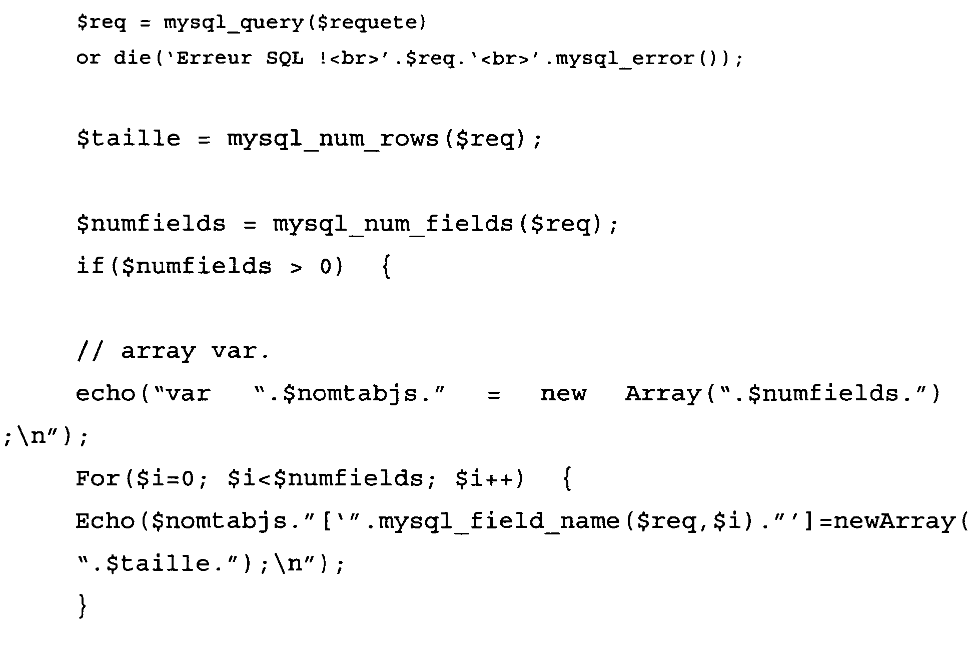

## Claims

1. Process for accessing a server associated to a database in a client-server configuration, said process comprising the steps of :
- setting up a connection to a web server (21) associated to a database;
- construction of a page comprising a reference (URL) to an executable code, such as an java applet ; the execution of said programming code causing access to said database for the purpose of elaboration of at least one table comprising information extracted from said database;
- pushing said page into a client browser;
- displaying into said client at least one graphical object representative of a numerical value within a predetermined range, said at least one graphical object being movable by the user;
- monitoring the control of said at least one graphical object by the user,
- in response to said monitoring, performing a local query within said at least one table with the numerical values defined by said graphical object in order to derive a preselection feedback information to user;
- returning said preselection feedback information to the user;
- in response to the user validating said preselection, constructing a query for the purpose of requesting the details of said preselection.

2. Process according to claim 1 **characterized in that** said at least one graphical object is a graphical slider and said preselection feedback information is displayed to the user.

3. Process according to claim 1 or 2 **characterized in that** said at least one table is received within a hidden i-form.

4. Process according to claim 3 **characterized in that** said i-form is prefilled with information extracted from said database and coded in ASCII form.

5. process according to claim 4 **characterized in that** said the information contained within said i-form is compressed.

6. Process according to claim 1 or 2 **characterized in that** said at least one table is constructed by an applet java and stored within the memory of the client computer.

7. Process according to claim 6 **characterized in that** said table is a multidimensional table .

8. Web server **characterized in that** it comprises means for carrying out a process as defined in anyone of claims 1 to 6.

9. Computer program product having program code elements for carrying out a method as claimed in any of claims 1 to 6.
